# EUROPEAN PATENT APPLICATION

(11) **EP 4 697 739 A1**
(43) Date of publication of application: **18.02.2026**
(21) Application number: 24796674.0
(22) Date of filing: 26.03.2024
(51) Int. Cl.: H04N 25/44, H04N 25/76

(54) **IMAGING DEVICE**

(30) Priority: 27.04.2023 JP 2023073465
(71) Applicant: Hamamatsu Photonics K.K., Hamamatsu-shi, Shizuoka 435-8558 (JP)
(72) Inventor: IWATA Takuya, Hamamatsu-shi, Shizuoka 435-8558 (JP); HATANO Katsuya, Hamamatsu-shi, Shizuoka 435-8558 (JP)
(74) Representative: Hoffmann Eitle
(86) International application number: PCT/JP2024/012052
(87) International publication number: WO 2024/224916

(57) **Abstract**

This imaging device comprises: a row selection unit that selects each row of a region to be read of a first imaging unit and each row of a region to be read of a second imaging unit; an accumulation unit that generates first data in which electrical signals read from the first imaging unit and electrical signals read from the second imaging unit are alternately accumulated; a rearrangement unit that generates second data by rearranging the electrical signals read from the first imaging unit at positions corresponding to the region to be read of the first imaging unit and the electrical signals read from the second imaging unit at positions corresponding to the region to be read of the second imaging unit, respectively; and an extraction unit that extracts third data corresponding to a region of interest from the second data.

## Description

### Technical Field

An exemplary embodiment of the present disclosure relates to an imaging apparatus. This application claims priority based on Japanese Patent Application No. 2023-073465 filed on April 27, 2023, the entire contents of which are incorporated herein by reference.

### Background Art

Patent Literature 1 discloses an imaging apparatus. This imaging apparatus includes an imaging unit that captures an image of a subject and outputs an image signal, a read-out unit that divides the entire imaging surface of the imaging unit into two, sets an arbitrary area as an effective imaging area, and divides the effective imaging area into an upper area and a lower area to simultaneously read out image signals, a storage unit that simultaneously stores the image signals read out from the upper area and the lower area, and a control unit that sequentially reads out the image signals of the upper area and the lower area stored in the storage unit so as to combine them into a single image.

### Citation List

### Patent Literature

Patent Literature 1: Japanese Unexamined Patent Application Publication No. H11-136578

### Summary of Invention

### Technical Problem

In an imaging apparatus, in order to speed up the reading of signals from each pixel, a plurality of rows of the imaging surface may be divided into at least two row groups (imaging units), and signals of each imaging unit may be read out in parallel. On the other hand, selectively reading out a signal from an arbitrary region (region of interest) on the imaging surface is also effective for speeding up signal read-out. When attempting to realize these configurations together, the following issues arise.

That is, it may be desired to set an arbitrary region of interest that is asymmetric between the imaging units. For example, this is a case where a certain imaging unit includes a region of interest, but another imaging unit does not include a region of interest. In such a case, complicated control is required, such as reading out a signal from only a certain imaging unit and not reading out a signal from another imaging unit. Furthermore, in the imaging apparatus of Patent Literature 1, in both the upper area and the lower area, a shift register sequentially changes the lines for turning on the switching elements in a mutually aligned direction. In this case, in both the upper area and the lower area, the image signals are read out along the direction. Therefore, a time lag may occur during image composition at the boundary between the upper area and the lower area.

An object of the present disclosure is to provide an imaging apparatus that reads out signals from a plurality of imaging units in parallel, and that can read out signals of an arbitrary region of interest without complicated control.

### Solution to Problem

An imaging apparatus according to one aspect of the present disclosure is [1] "an imaging apparatus comprising: a first imaging unit including a plurality of pixels arranged from a first row to an M₁-th row (M₁ is an integer greater than or equal to 2); a second imaging unit including a plurality of pixels arranged from a first row to an M₂-th row (M₂ is an integer greater than or equal to 2), and arranged such that the first row thereof faces the first row of the first imaging unit; an input unit that receives an input for setting a region of interest extending over at least one of the first imaging unit and the second imaging unit; a row selection unit that selects each row included in a first read-out region, which is a part of the first imaging unit, and each row included in a second read-out region, which is a part of the second imaging unit, in ascending order in both of the first imaging unit and the second imaging unit, or in descending order in both of the first imaging unit and the second imaging unit; an accumulation unit that generates first data in which electrical signals read out from each row of the first read-out region selected by the row selection unit and electrical signals read out from each row of the second read-out region selected by the row selection unit are alternately accumulated; a rearrangement unit that generates second data by rearranging the electrical signals read out from the first read-out region , which are in the first data, to positions corresponding to the first read-out region, and rearranging the electrical signals read out from the second read-out region, which are in the first data, to positions corresponding to the second read-out region; and an extraction unit that extracts third data corresponding to the region of interest from the second data, wherein at least a part of the region of interest is set in the first imaging unit, at least a group of row numbers of the first read-out region is set based on a group of row numbers of the region of interest, and the group of row numbers of the first read-out region includes the group of row numbers of the region of interest in the first imaging unit."

In the imaging apparatus according to [1], the region of interest is set in the first imaging unit, and at least the group of row numbers of the first read-out region is set based on the group of row numbers of the region of interest. The group of row numbers of the first read-out region includes the group of row numbers of the region of interest in the first imaging unit. This allows for selectively reading out the electrical signals from the group of row numbers of the read-out region, which includes the group of row numbers of the region of interest, from the entire first imaging unit. Then, the row selection unit selects each row included in the first read-out region and each row included in the second read-out region in ascending order or in descending order in both of the first imaging unit and the second imaging unit. This allows for reading out electrical signals in parallel from the rows of the first imaging unit and the rows of the second imaging unit. Therefore, even if the region of interest is set only in the first imaging unit, there is no need for complicated control such as reading out electrical signals only from the rows of the first imaging unit and not reading out electrical signals from the rows of the second imaging unit. In other words, the electrical signals of an arbitrary region of interest can be read out without complicated control. Furthermore, since the accumulation unit generates the first data, processing can be easier compared to, for example, a case where the electrical signals read out from the rows of the first imaging unit and the electrical signals read out from the rows of the second imaging unit are processed individually. In addition, the rearrangement unit rearranges the first data to generate the second data, and the extraction unit extracts the third data corresponding to the region of interest. This allows the region of interest to be set arbitrarily. Furthermore, since the row selection direction can be ascending or descending in each unit, the row selection direction in the first imaging unit can be made opposite to the row selection direction in the second imaging unit. This can make it difficult for a deviation to occur in the read-out timing of electrical signals near the boundary line between the first imaging unit and the second imaging unit.

The imaging apparatus according to one aspect of the present disclosure may be [2] "the imaging apparatus according to [1], wherein the group of row numbers of the first read-out region matches a group of row numbers of the second read-out region." In this case, when reading out electrical signals in parallel from the rows of the first imaging unit and the rows of the second imaging unit, the rows to be read out can be matched. This allows the electrical signals of an arbitrary region of interest to be read out with simpler control.

The imaging apparatus according to one aspect of the present disclosure may be [3] "the imaging apparatus according to [1] or [2], wherein the region of interest is set in the second imaging unit, at least a group of row numbers of the second read-out region is set based on the group of row numbers of the region of interest, and the group of row numbers of the second read-out region includes the group of row numbers of the region of interest in the second imaging unit." In this case, even if the region of interest is set only in the second imaging unit, there is no need for complicated control such as reading out electrical signals only from the rows of the second imaging unit and not reading out electrical signals from the rows of the first imaging unit. In other words, the electrical signals of an arbitrary region of interest can be read out without complicated control.

The imaging apparatus according to one aspect of the present disclosure may be [4] "the imaging apparatus according to any one of [1] to [3], wherein the extraction unit extracts a part of the second data to generate the third data." In this case, even when the region of interest is set in either one of the first imaging unit and the second imaging unit, the third data corresponding to the region of interest can be generated.

The imaging apparatus according to one aspect of the present disclosure may be [5] "the imaging apparatus according to any one of [1] to [3], wherein the extraction unit extracts all of the second data to generate the third data." In this case, even when the region of interest is set in both of the first imaging unit and the second imaging unit, the third data corresponding to the region of interest can be generated.

The imaging apparatus according to one aspect of the present disclosure may be [6] "the imaging apparatus according to any one of [1] to [5], wherein the row selection unit selects each row included in the first read-out region and each row included in the second read-out region in ascending order in both of the first imaging unit and the second imaging unit." The region of interest is often set in a region close to the boundary line between the first imaging unit and the second imaging unit. In the above-described imaging apparatus, by selecting each row included in the read-out region in ascending order, the electrical signals of the region of interest can be read out at an early timing. This can suppress the saturation of pixels included in the region of interest due to a longer exposure time for the region of interest. Furthermore, reading out the electrical signals of the rows near the boundary line first, compared to reading them out last, can suppress a deviation in the read-out timing near the boundary line.

The imaging apparatus according to one aspect of the present disclosure may be [7] "the imaging apparatus according to any one of [1] to [6], wherein the row selection unit simultaneously selects rows of the same number in both of the first imaging unit and the second imaging unit based on a common instruction signal." In this case, since the row selection unit does not need to individually select each row of the first imaging unit and each row of the second imaging unit, the load on the row selection unit can be reduced.

The imaging apparatus according to one aspect of the present disclosure may be [8] "the imaging apparatus according to any one of [1] to [7], wherein the plurality of pixels of the first imaging unit and the plurality of pixels of the second imaging unit are arranged from a first column to an L-th column (L is an integer greater than or equal to 2), the imaging apparatus further comprising: a first read-out circuit that reads out the electrical signals read out from each row of the first read-out region sequentially from the first column; and a second read-out circuit that reads out the electrical signals read out from each row of the second read-out region sequentially from the first column, wherein the first column of the second imaging unit is located on a side opposite to the first column of the first imaging unit in a row direction." In this case, since the first column of the second imaging unit is located on the side opposite to the first column of the first imaging unit in the row direction, the connection configuration between the first read-out circuit and the first imaging unit and the connection configuration between the second read-out circuit and the second imaging unit can be made the same. Therefore, the design of the connection configuration between the first read-out circuit and the first imaging unit and the connection configuration between the second read-out circuit and the second imaging unit can be facilitated.

The imaging apparatus according to one aspect of the present disclosure may be [9] "the imaging apparatus according to any one of [1] to [8], wherein the input unit receives at least the region of interest that is set in both of the first imaging unit and the second imaging unit, includes the first row in both of the first imaging unit and the second imaging unit, and has row ranges different from each other in the first imaging unit and the second imaging unit." Even when the region of interest is set in both the first imaging unit and the second imaging unit, and the row range of the region of interest in the first imaging unit is different from the row range of the region of interest in the second imaging unit, the signals of the arbitrary region of interest can be read out without complicated control.

The imaging apparatus according to one aspect of the present disclosure may be [10] "the imaging apparatus according to any one of [1] to [8], wherein the input unit receives at least the region of interest that is set in one of the first imaging unit and the second imaging unit and does not include the first row in the one imaging unit." Even when the region of interest is set in one of the first imaging unit and the second imaging unit, the signals of the arbitrary region of interest can be read out without complicated control.

The imaging apparatus according to one aspect of the present disclosure may be [11] "the imaging apparatus according to any one of [1] to [10], wherein the number of rows of the first read-out region matches the number of rows of the second read-out region." In this case, when reading out electrical signals in parallel from the rows of the first imaging unit 21 and the rows of the second imaging unit 22, the degree of freedom in read-out can be improved while realizing simple control by matching the number of rows to be read out.

The imaging apparatus according to one aspect of the present disclosure may be [12] "the imaging apparatus according to any one of [1] to [11], further comprising a control unit that selectively switches between a mode of reading out electrical signals from each row included in the first read-out region and each row included in the second read-out region, and a mode of reading out electrical signals from all rows of the first imaging unit and the second imaging unit." In this case, the mode of reading out electrical signals from all rows of the first imaging unit and the second imaging unit, and the mode of reading out electrical signals from each row included in the first read-out region and each row included in the second read-out region can be performed with the same interface, and the degree of freedom in read-out can be improved.

### Advantageous Effects of Invention

According to one exemplary embodiment, in an imaging apparatus that reads out signals from a plurality of imaging units in parallel, signals from an arbitrary region of interest can be read out without complicated control.

### Brief Description of Drawings

[FIG. 1] FIG. 1 is a block diagram illustrating an imaging apparatus according to an embodiment of the present disclosure.
[FIG. 2] FIG. 2 is a diagram illustrating an imaging unit, a row selection unit, and a plurality of read-out circuits.
[FIG. 3] FIG. 3 is an enlarged plan view of a part of a first imaging unit.
[FIG. 4] FIG. 4 is a further enlarged plan view of a part of the first imaging unit.
[FIG. 5] FIG. 5 is a diagram illustrating an internal configuration of the first imaging unit.
[FIG. 6] FIG. 6 is a diagram illustrating a detailed circuit configuration example of a pixel, an integration circuit, and a holding circuit.
[FIG. 7] FIG. 7 is a circuit diagram illustrating a detailed configuration of a first row selection unit.
[FIG. 8] FIG. 8 is a timing chart illustrating an operation of the first row selection unit.
[FIG. 9] FIG. 9 is a diagram for explaining an example of setting a region of interest.
[FIG. 10] FIG. 10 is a diagram for explaining a read-out region.
[FIG. 11] FIG. 11 is a diagram for explaining operations of a plurality of read-out circuits, a plurality of FIFO memories, and a multiplexer.
[FIG. 12] FIG. 12 is a diagram illustrating an example of first data generated by an accumulation unit.
[FIG. 13] FIG. 13 is a diagram illustrating an example of second data generated by a rearrangement unit.
[FIG. 14] FIG. 14 is a diagram illustrating an example of third data generated by an extraction unit.
[FIG. 15] FIG. 15 is a diagram for explaining a read-out region according to a first modification.
[FIG. 16] FIG. 16 is a diagram for explaining another example of setting a region of interest.
[FIG. 17] FIG. 17 is a diagram for explaining a read-out region according to a second modification.
[FIG. 18] FIG. 18 is a diagram for explaining a read-out region according to a third modification.

### Description of Embodiments

Hereinafter, a preferred embodiment of an imaging apparatus according to an embodiment of the present disclosure will be described in detail with reference to the drawings.

### [Configuration and Operation of Imaging Apparatus]

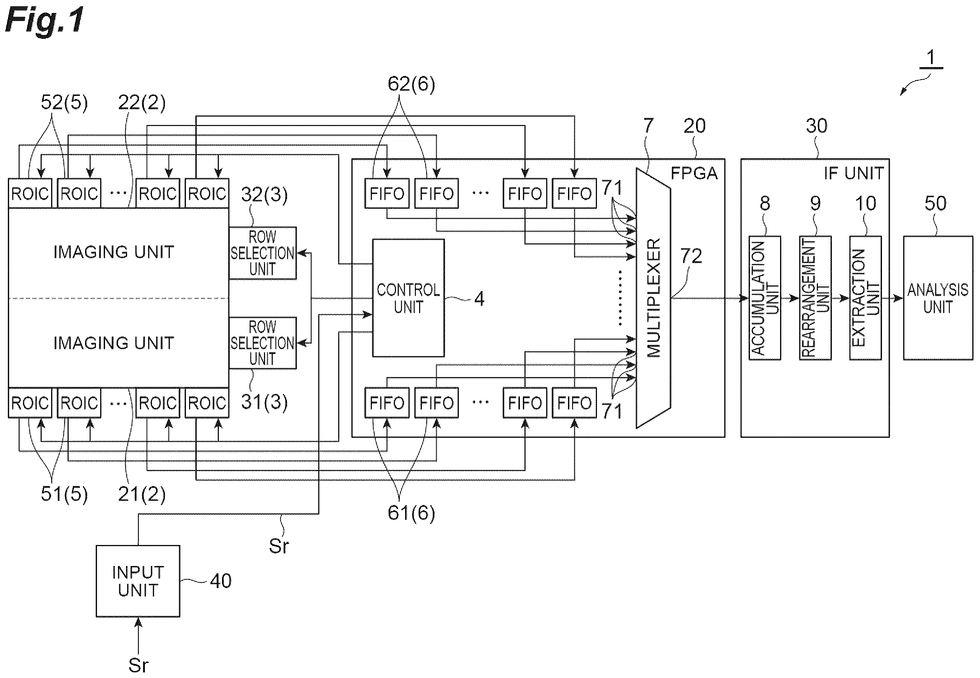

FIG. 1 is a block diagram illustrating an imaging apparatus according to an embodiment of the present disclosure. The imaging apparatus 1 acquires an X-ray image of an object by detecting X-rays that have passed through the object. The imaging apparatus 1 includes an imaging unit 2, a row selection unit 3, a plurality of read-out circuits 5, an FPGA (Field-Programmable Gate Array) 20, an IF (interface) unit 30, and an analysis unit 50. The FPGA 20 includes a control unit 4, a plurality of FIFO memories 6, and a multiplexer 7. The IF unit 30 has an accumulation unit 8, a rearrangement unit 9, and an extraction unit 10.

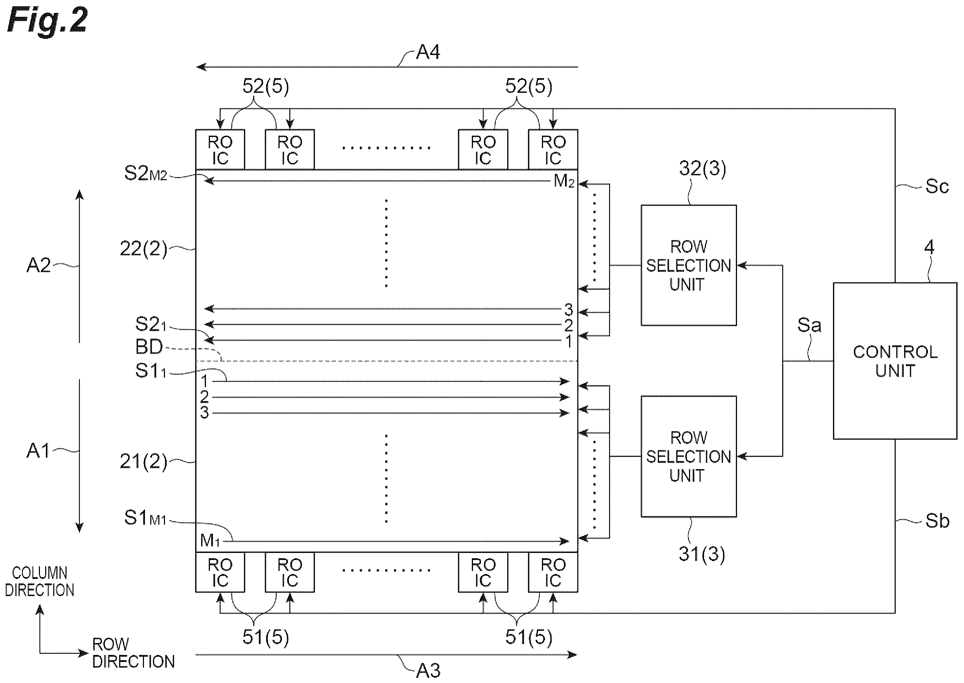

FIG. 2 is a diagram illustrating the imaging unit 2, the row selection unit 3, and the plurality of read-out circuits 5. The imaging unit 2 includes a scintillator. The imaging unit 2 is a functional unit that converts X-rays into light by the scintillator and further converts the light into electrical signals. The imaging unit 2 has a first imaging unit 21 and a second imaging unit 22. The first imaging unit 21 includes a plurality of pixels arranged from a first row to an M₁-th row (M₁ is an integer greater than or equal to 2). The second imaging unit 22 includes a plurality of pixels arranged from the first row to an M₂-th row (M₂ is an integer greater than or equal to 2). In the present embodiment, the number of rows M₁ of the first imaging unit 21 and the number of rows M₂ of the second imaging unit 22 are equal to each other. Here, for convenience of explanation, a direction in which the plurality of pixels are arranged from the first row to the M₁-th row is defined as a column direction, and a direction perpendicular to the column direction is defined as a row direction. The second imaging unit 22 is aligned with the first imaging unit 21 along the column direction. The first row of the second imaging unit 22 is arranged to face the first row of the first imaging unit 21. The first imaging unit 21 and the second imaging unit 22 may be configured by dividing one imaging unit 2 into two. Specifically, one imaging unit 2 may be divided into two such that the read-out directions of electrical signals generated by the plurality of pixels are opposite to each other in the first imaging unit 21 and the second imaging unit 22, respectively. The read-out of electrical signals will be described later. Alternatively, the first imaging unit 21 and the second imaging unit 22 may be independent imaging units respectively, and the imaging unit 2 may be configured by tiling the first imaging unit 21 and the second imaging unit 22.

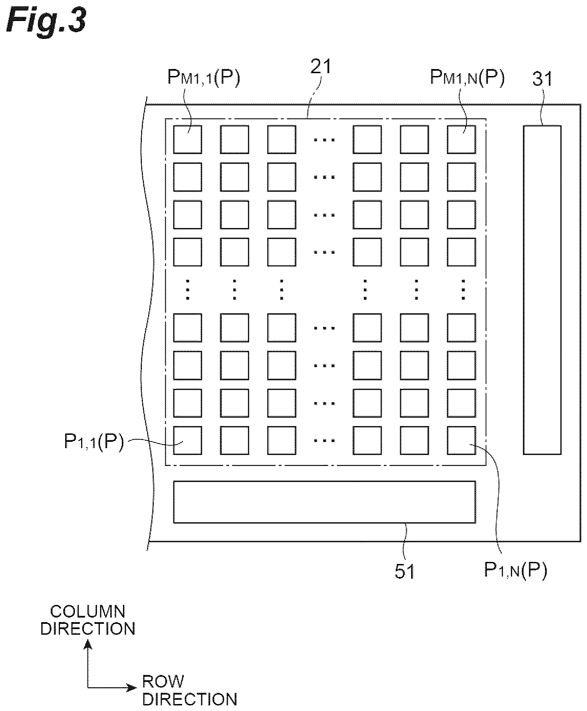

In the first imaging unit 21 and the second imaging unit 22, the plurality of pixels are arranged along the row direction in addition to the column direction. The plurality of pixels of the first imaging unit 21 and the plurality of pixels of the second imaging unit 22 are arranged from a first column to an L-th column (L is an integer greater than or equal to 2). The plurality of pixels are arranged, for example, in 3072 pixels in the row direction and 1536 pixels in the column direction in each of the first imaging unit 21 and the second imaging unit 22. FIG. 3 is an enlarged plan view of a part of the first imaging unit 21. In the part of the first imaging unit 21 shown in FIG. 3, a plurality of pixels P_{1,1} to P_{M1,N} are two-dimensionally arranged over M₁ rows and N columns (N is an integer greater than or equal to 2 and less than or equal to L). The plurality of pixels P are arranged from the first column to an N-th column in the row direction.

The row selection unit 3 is a functional unit that selects the plurality of pixels P included in the imaging unit 2 on a row-by-row basis. The row selection unit 3 includes a first row selection unit 31 that selects each row of the first imaging unit 21, and a second row selection unit 32 that selects each row of the second imaging unit 22. The first row selection unit 31 and the second row selection unit 32 are controlled based on a common instruction signal Sa transmitted from the control unit 4. In the present embodiment, the first row selection unit 31 selects each row of the first imaging unit 21 in ascending order. The second row selection unit 32 selects each row of the second imaging unit 22 in ascending order. The first row selection unit 31 and the second row selection unit 32 simultaneously select rows of the same number based on the common instruction signal Sa. Specifically, this is as follows. The first row selection unit 31 sequentially selects the rows of the first imaging unit 21 along a first direction A1 between a row closest to a boundary line BD between the first imaging unit 21 and the second imaging unit 22 (the first row) and a row farthest from the boundary line BD (the M₁-th row). In parallel with this, the second row selection unit 32 sequentially selects the rows of the second imaging unit 22 along a second direction A2 between a row closest to the boundary line BD (the first row) and a row farthest from the boundary line BD (the M₂-th row). The first direction A1 is a direction from the row closest to the boundary line BD to the row farthest from the boundary line BD in the first imaging unit 21. The second direction A2 is a direction from the row closest to the boundary line BD to the row farthest from the boundary line BD in the second imaging unit 22. The second direction A2 is a direction opposite to the first direction A1.

The plurality of read-out circuits 5 are functional units that read out electrical signals generated in the pixels P included in the row selected by the row selection unit 3. The plurality of read-out circuits 5 have a plurality of first read-out circuits 51 that read out electrical signals of the rows of the first imaging unit 21, and a plurality of second read-out circuits 52 that read out electrical signals of the rows of the second imaging unit 22. Each of the plurality of first read-out circuits 51 and the plurality of second read-out circuits 52 is illustrated as an ROIC (ReadOut IC). In the example of FIG. 3, N columns of pixels P are assigned to each first read-out circuit 51.

The plurality of first read-out circuits 51 are controlled based on an instruction signal Sb transmitted from the control unit 4. The plurality of second read-out circuits 52 are controlled based on an instruction signal Sc transmitted from the control unit 4. The plurality of first read-out circuits 51 sequentially read out the electrical signals from an electrical signal S1₁ of the first row of the first imaging unit 21 to an electrical signal S1_{M1} of the M₁-th row of the first imaging unit 21. At this time, each of the plurality of first read-out circuits 51 reads out the signal of each row for every N columns sequentially from the first column along a third direction A3. The plurality of second read-out circuits 52 sequentially read out electrical signals from an electrical signal S2₁ of the first row of the second imaging unit 22 to an electrical signal S2_{M2} of the M₂-th row of the second imaging unit 22. At this time, each of the plurality of second read-out circuits 52 reads out the signal of each row for every N columns sequentially from the first column along a fourth direction A4. The third direction A3 is a direction opposite to the fourth direction A4. The first column of the second imaging unit 22 is located on a side opposite to the first column of the first imaging unit 21 in the row direction.

The detailed configurations and operations of the imaging unit 2, the row selection unit 3, and the plurality of read-out circuits 5 will be described with reference to FIGS. 3 to 8. Although the first imaging unit 21, the first row selection unit 31, and the plurality of first read-out circuits 51 will be described as an example, the configurations and operations of the second imaging unit 22, the second row selection unit 32, and the plurality of second read-out circuits 52 are also the same. Each of the pixels P_{1,1} to P_{M1,N} is configured to include a transistor 211 and a photodiode 212. The transistor 211 is preferably configured as a field-effect transistor (FET), but may be configured as a bipolar transistor. Hereinafter, it is assumed that the transistor 211 is an FET. In this case, a control terminal means a gate. If the transistor 211 is a bipolar transistor, the control terminal means a base.

The photodiode 212 generates an amount of charge corresponding to the incident light intensity and accumulates the generated charge in a junction capacitance portion. One end (for example, its source region) of the transistor 211 is electrically connected to the photodiode 212. A scintillator (not shown) is provided on the first imaging unit 21. The scintillator generates scintillation light in response to the incident X-rays, converts an X-ray image into a light image, and outputs this light image to the photodiode 212.

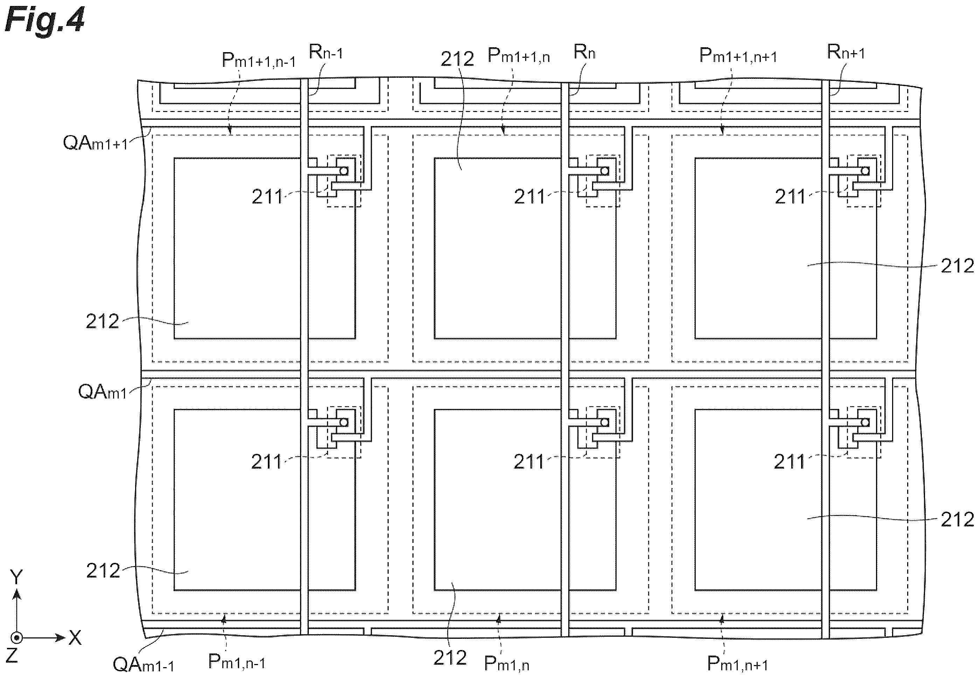

The first imaging unit 21 further includes M₁ row selection wirings QA₁ to QA_{M1} (QAₘ₁₋₁, QAₘ₁, and QAₘ₁₊₁ are representatively shown in FIG. 4) arranged in each row, and a plurality of read-out wirings R₁ to R_{L} (Rₙ₋₁, Rₙ, and Rₙ₊₁ are representatively shown in FIG. 4) arranged in each column. The row selection wiring QAₘ₁ of the m₁-th row electrically connects a control terminal (for example, a gate terminal) for controlling the open/closed state of the transistor 211 included in the pixels P_{m1,1} to P_{m1,L} of the corresponding row to the first row selection unit 31.

The first row selection unit 31 generates a row selection signal for controlling the on/off state of the transistor 211 for each row based on the common instruction signal Sa transmitted from the control unit 4, and provides the row selection signal to the row selection wiring QAₘ₁ of the m₁-th row. The read-out wiring R_{L} of the L-th column is electrically connected to the other ends (for example, their drain regions) of the transistors 211 included in the pixels P_{1,L} to P_{M1,L} of the corresponding column. The row selection wirings QA₁ to QA_{M1} and the read-out wirings R₁ to R_{L} are made of, for example, metal.

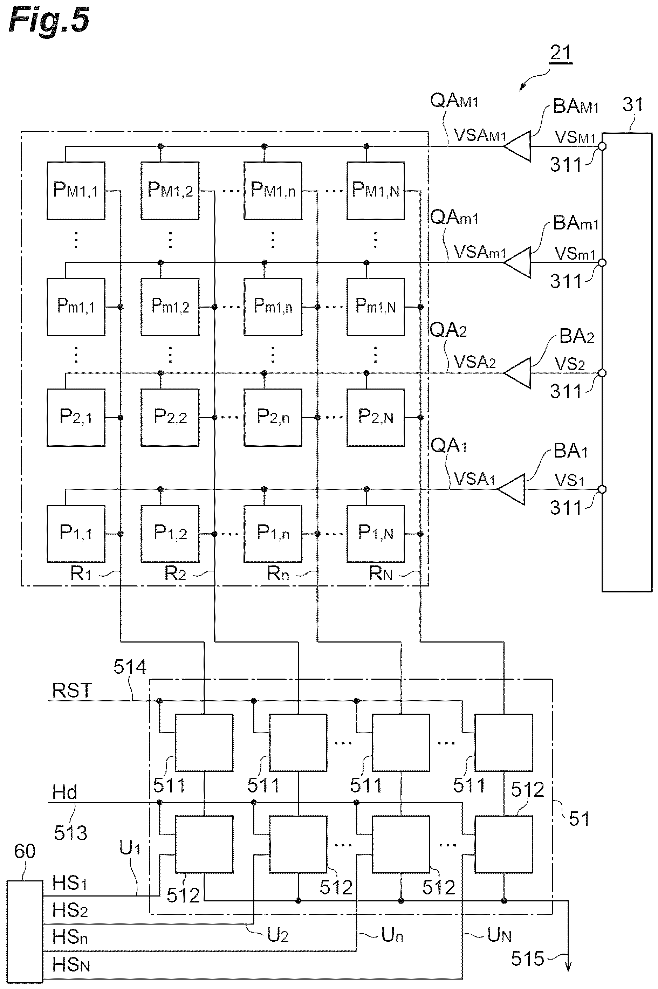

Next, the circuit configuration of the first imaging unit 21 will be described in detail. FIG. 5 is a diagram illustrating an internal configuration of the first imaging unit 21. As shown in the figure, the first imaging unit 21 includes M₁ buffers BA₁ to BA_{M1}, each of which has an output terminal connected to a corresponding one of the M₁ row selection wirings QA₁ to QA_{M1}. Then, the first row selection unit 31 generates row selection signals VS₁ to VS_{M1} for controlling the on/off state of the transistors 211 of the pixels P_{1,1} to P_{M1,N} for each row.

The first row selection unit 31 has M₁ signal output terminals 311 provided one for each row for outputting the row selection signals VS₁ to VS_{M1}, and each signal output terminal 311 is connected to the input terminal of a corresponding one of the buffers BA₁ to BA_{M1}. Then, the first row selection unit 31 provides the row selection signal VSₘ₁ of the m₁-th row to the input terminal of the buffer BAₘ₁. A row selection signal VSAₘ₁ based on the row selection signal VSₘ₁ is output from the buffer BAₘ₁. In the first row selection unit 31, the row selection signals VS₁ to VS_{M1} are sequentially set to a significant value.

Each first read-out circuit 51 includes N integration circuits 511 provided for each column and N holding circuits 512. The integration circuit 511 and the holding circuit 512 are connected in series with each other in each column. Each of the N integration circuits 511 has an input terminal connected to a respective one of the read-out wirings R₁ to R_{N}. Each of the N integration circuits 511 accumulates the charge input from the read-out wirings R₁ to R_{N}, and outputs a voltage value corresponding to the accumulated charge amount from its output terminal to each of the N holding circuits 512. Each of the N integration circuits 511 is connected to a reset wiring 514 provided in common for the N integration circuits 511.

The imaging apparatus 1 further includes a first column selection unit 60. Each of the N holding circuits 512 has an input terminal connected to the output terminal of the integration circuit 511. Each of the N holding circuits 512 holds the voltage value input to this input terminal, and outputs the held voltage value from an output terminal to a voltage output wiring 515. Each of the N holding circuits 512 is connected to a holding wiring 513 provided in common for the N holding circuits 512. The N holding circuits 512 is connected to the first column selection unit 60 via a first column selection wiring U₁ to an N-th column selection wiring U_{N}, respectively.

The first column selection unit 60 generates column selection signals HS₁ to HS_{N}. The first column selection unit 60, for example, receives the instruction signal Sb from the plurality of first read-out circuits 51 that receive the instruction signal Sb from the control unit 4, and generates the column selection signals HS₁ to HS_{N} based on the instruction signal Sb. The first column selection unit 60 provides them to each of the N holding circuits 512 via the column selection wirings U₁ to U_{N}. The column selection signals HS₁ to HS_{N} are sequentially set to a significant value. A reset control signal RST is provided to each of the N integration circuits 511 via a reset wiring 514. A holding control signal Hd is provided to each of the N holding circuits 512 via a holding wiring 513.

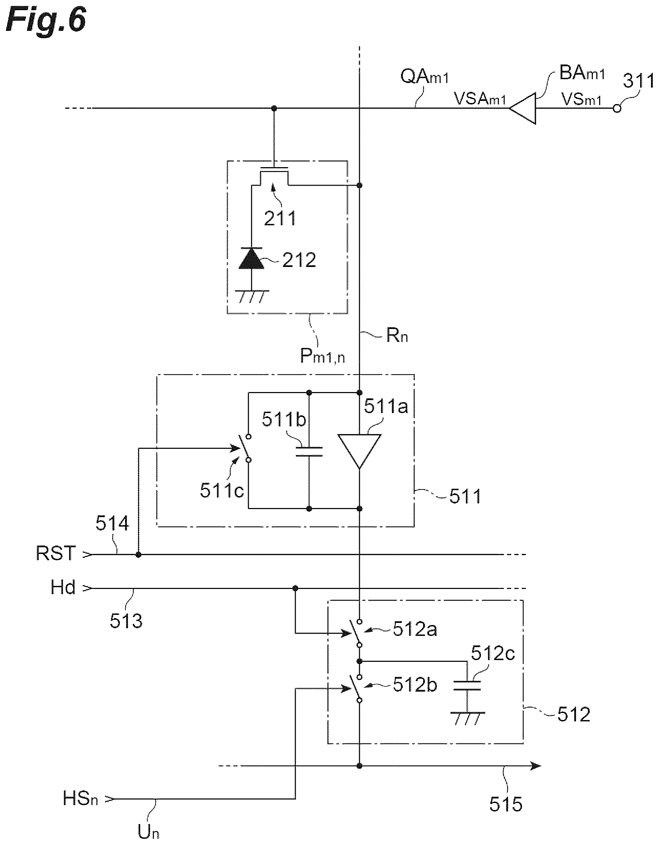

FIG. 6 is a diagram illustrating a detailed circuit configuration example of the pixel P_{m1,n}, the integration circuit 511, and the holding circuit 512. Here, a circuit diagram of the pixel P_{m1,n} in the m₁-th row and n-th column is shown as a representative of the M1×N pixels P_{1,1} to P_{M1,N}.

As shown in FIG. 6, the anode terminal of the photodiode 212 of the pixel P_{m1,n} is grounded, and the cathode terminal is connected to the read-out wiring Rn via the transistor 211. The row selection signal VSAₘ₁ is provided to the transistor 211 of the pixel P_{m1,n} from the buffer BAₘ₁ via the row selection wiring QAₘ₁. The row selection signal VSAₘ₁ instructs the on/off operation of the transistors 211 included in the N pixels P_{m1,1} to P_{m1,N} of the m₁-th row.

When the row selection signal VSAₘ₁ is at a non-significant value (off voltage of the control terminal of the transistor 211), the charge generated in the photodiode 212 is accumulated in the junction capacitance portion of the photodiode 212 without being output to the read-out wiring Rₙ. On the other hand, when the row selection signal VSAₘ₁ is at a significant value (on voltage of the control terminal of the transistor 211), the transistor 211 enters a conductive state. At this time, the charge accumulated in the junction capacitance portion of the photodiode 212 is output to the read-out wiring Rₙ via the transistor 211. The charge output from the photodiode 212 of the pixel P_{m1,n} is sent to the integration circuit 511 through the read-out wiring Rₙ.

The integration circuit 511 has a so-called charge integration type configuration including an amplifier 511a, a capacitance element 511b, and a discharge switch 511c. The capacitance element 511b and the discharge switch 511c are connected in parallel with each other, and are connected between the input terminal and the output terminal of the amplifier 511a. The input terminal of the amplifier 511a is connected to the read-out wiring Rₙ. The reset control signal RST is provided to the discharge switch 511c via the reset wiring 514.

The reset control signal RST instructs the open/closed operation of the discharge switch 511c of each of the N integration circuits 511. For example, when the reset control signal RST is at a non-significant value (for example, high level), the discharge switch 511c closes, the capacitance element 511b is discharged, and the output voltage value of the integration circuit 511 is initialized. On the other hand, when the reset control signal RST is at a significant value (for example, low level), the discharge switch 511c opens, the charge input to the integration circuit 511 is accumulated in the capacitance element 511b, and a voltage value corresponding to the accumulated charge amount is output from the integration circuit 511.

The holding circuit 512 includes an input switch 512a, an output switch 512b, and a capacitance element 512c. One end of the capacitance element 512c is grounded. The other end of the capacitance element 512c is connected to the output terminal of the integration circuit 511 via the input switch 512a, and is connected to the voltage output wiring 515 via the output switch 512b. The holding control signal Hd is given to the input switch 512a via the holding wiring 513. The holding control signal Hd instructs the open/closed operation of the input switch 512a of each of the N holding circuits 512. The column selection signal HSₙ of the n-th column is applied to the output switch 512b of the holding circuit 512 via the selection wiring Uₙ of the n-th column. The column selection signal HSₙ of the n-th column instructs the open/closed operation of the output switch 512b of the holding circuit 512.

For example, when the holding control signal Hd changes from high level to low level, the input switch 512a changes from a closed state to an open state, and the voltage value input to the holding circuit 512 at that time is held in the capacitance element 512c. For example, when the column selection signal HSₙ of the n-th column changes from low level to high level, the output switch 512b closes, and the voltage value held in the capacitance element 512c is output to the voltage output wiring 515.

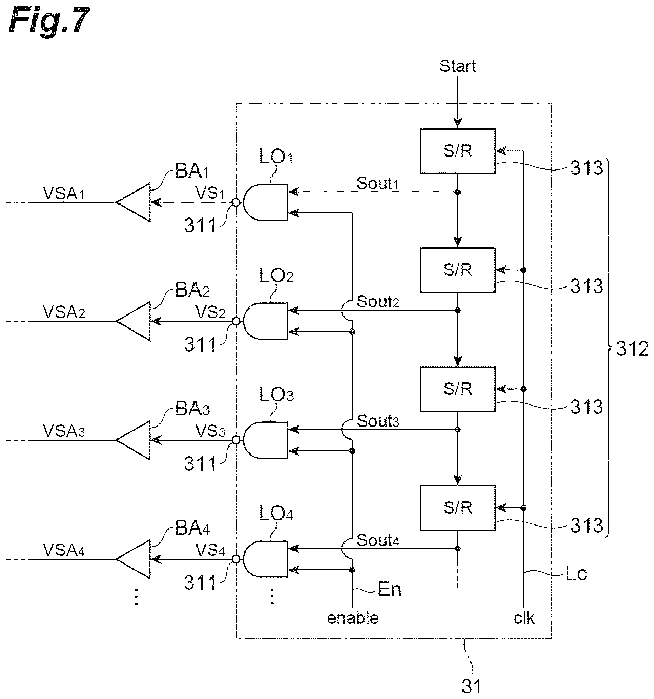

FIG. 7 is a circuit diagram illustrating a detailed configuration of the first row selection unit 31 of the present embodiment. As shown in FIG. 7, the first row selection unit 31 includes a shift register array 312 and M₁ logic circuits LO₁ to LO_{M1} (LO₁ to LO₄ are representatively shown in the figure).

The shift register array 312 is configured by connecting M₁ shift register circuits 313 in series. These shift register circuits 313 are arranged one for each row. The shift register circuit 313 is composed of, for example, a plurality of FETs having the same structure as the transistor 211 shown in FIG. 4. A clock wiring Lc is connected to each shift register circuit 313, and a clock signal clk of a constant period is provided from the clock wiring Lc to each shift register circuit 313.

The M₁ logic circuits LO₁ to LO_{M1} are arranged corresponding to each row, and the output terminal of the logic circuit LOₘ₁ of the m₁-th row is connected to the input terminal of the aforementioned buffer BAₘ₁ via a signal output terminal 311 provided for each row. An enable wiring En is connected to one input terminal of each of the logic circuits LO₁ to LO_{M1}, and a control input signal enable is provided from the enable wiring Eₙ to each of the logic circuits LO₁ to LO_{M1}. The output terminal of the shift register circuit 313 corresponding to the row is connected to the other input terminal of each of the logic circuits LO₁ to LO_{M1}.

Each of the M₁ logic circuits LO₁ to LO_{M1} outputs each of the row selection signals VS₁ to VS_{M1} so as to turn on the transistor 211 when both the control input signal enable and the output signals Sout₁ to Sout_{M1} from the corresponding shift register circuit 313 are at a significant value. For example, when the significant value of the control input signal enable is at a high level and the significant values of the output signals Sout₁ to Sout_{M1} from the shift register circuit 313 are at a high level, the logic circuit LOₘ₁ of the m₁-th row outputs the logical product (AND) of the control input signal enable and the output signal Soutₘ₁ from the shift register circuit 313. Although the logic circuits LO₁ to LO_{M1} are illustrated with a symbol representing an AND circuit in FIG. 7, the logic circuits LO₁ to LO_{M1} may be configured as a combination of various other logic circuits.

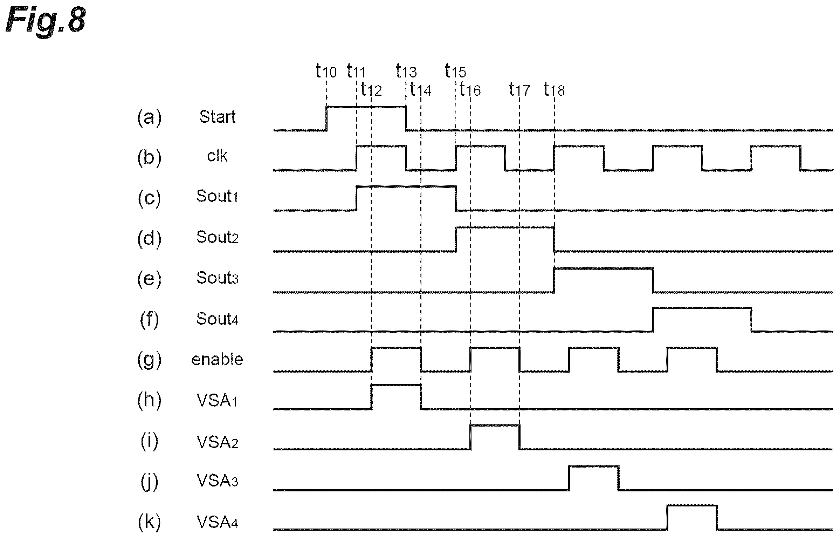

FIG. 8 is a timing chart illustrating the operation of the first row selection unit 31 of the present embodiment. FIG. 8 shows, in order from the top, (a) a start signal Start, (b) a clock signal clk, (c) an output signal Sout₁ from the shift register circuit 313 of the first row, (d) an output signal Sout₂ from the shift register circuit 313 of the second row, (e) an output signal Sout₃ from the shift register circuit 313 of the third row, (f) an output signal Sout₄ from the shift register circuit 313 of the fourth row, (g) a control input signal enable, (h) a first row selection signal VSA₁, (i) a second row selection signal VSA₂, (j) a third row selection signal VSA₃, and (k) a fourth row selection signal VSA₄.

First, during a period from time t₁₀ to time t₁₃, the start signal Start is set to a high level. During this time, when the clock signal clk rises, the output signal Sout₁ from the shift register circuit 313 of the first row rises (time t₁₁). This output signal Sout₁ falls in response to the next rising edge of the clock signal clk (time t₁₅). Then, within a predetermined period (times t₁₂ to t₁₄) included in the period from time t₁₁ to time t₁₅ during which the output signal Sout₁ is at a high level, the control input signal enable is set to a high level. As a result, the first row selection signal VSA₁ becomes high level, and the transistors 211 included in each of the pixels P_{1,1} to P_{1,L} of the first row become a conductive state.

Subsequently, at the same time as the output signal Sout₁ from the shift register circuit 313 of the first row falls, the output signal Sout₂ from the shift register circuit 313 of the second row rises (time t₁₅). This output signal Sout₂ falls in response to the next rising edge of the clock signal clk (time t₁₈). Then, within a predetermined period (time t₁₆ to t₁₇) included in the period from time t₁₅ to time t₁₈ when the output signal Sout₂ is at a high level, the control input signal enable is set to a high level again. As a result, the second row selection signal VSA₂ becomes high level, and the transistors 211 included in each of the pixels P_{2,1} to P_{2,L} of the second row become a conductive state. Thereafter, by the same operation as in the second row, the row selection signal VSAₘ₁ of the third and subsequent rows sequentially becomes high level, and the transistors 211 included in each pixel sequentially become a conductive state for each row.

### [Setting, Read-out, and Extraction of Region of Interest]

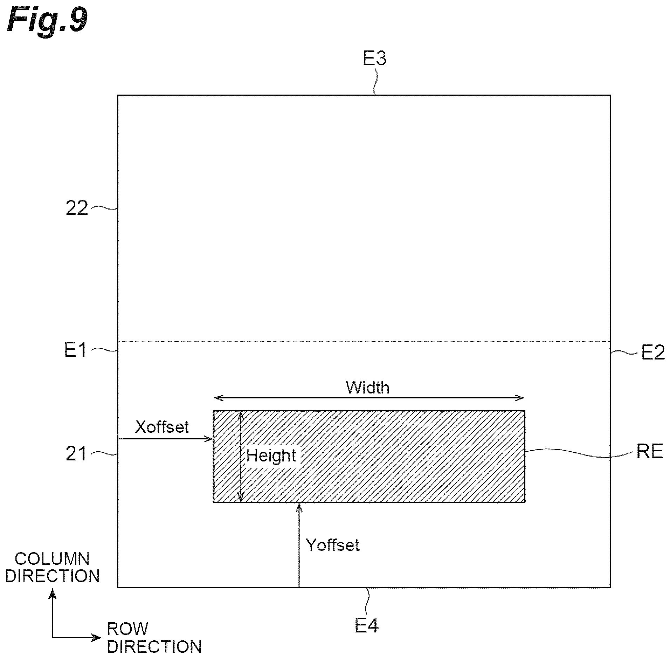

Next, the region of interest will be described. As shown in FIG. 1, the imaging apparatus 1 further includes an input unit 40. The input unit 40 receives an input Sr from the outside for setting a region of interest RE extending over at least one of the first imaging unit 21 and the second imaging unit 22. The input unit 40 transmits the received input Sr to the control unit 4. FIG. 9 is a diagram for explaining an example of setting the region of interest RE. The region of interest RE is, for example, a region of the imaging unit 2 where X-rays are incident. When the imaging unit 2 is defined as a rectangular region surrounded by a pair of first sides E1, E2 facing each other in the row direction and a pair of second sides E3, E4 facing each other in the column direction, a user can preset the region of interest RE in an arbitrary region of the rectangular region. The user can individually set the region of interest RE for each of the first imaging unit 21 and the second imaging unit 22. The region of interest RE of the first imaging unit 21 and the region of interest RE of the second imaging unit 22 may be asymmetric with each other. The minimum unit of the region of interest RE is one pixel among the plurality of pixels P. In the present embodiment, the region of interest RE is set only in the first imaging unit 21 and is not set in the second imaging unit 22. The user sets a width Width of the region of interest RE, a height Height of the region of interest RE, an offset Xoffset in the row direction from the first side E1 to the region of interest RE, and an offset Yoffset in the column direction from the second side E4 to the region of interest RE.

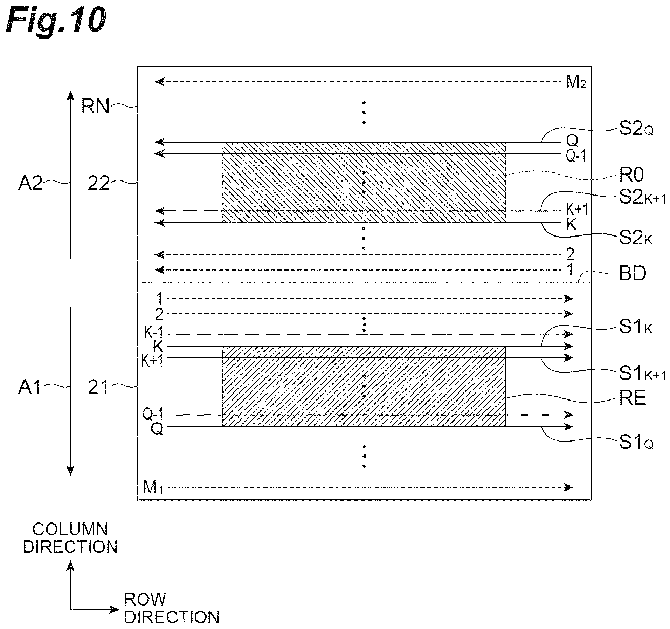

FIG. 10 is a diagram for explaining a read-out region. The read-out region is a region of the imaging unit 2 from which electrical signals are read out by the read-out circuit 5. The region of interest RE is set from a K-th row to a Q-th row in the first imaging unit 21. Here, K is an integer greater than or equal to 2 and less than or equal to Q, and Q is an integer greater than or equal to K and less than or equal to M₁. In other words, the region of interest RE is set at a position spaced by K-1 rows from the boundary line BD, extending over the number of rows corresponding to the difference between Q rows and K rows along the column direction. That is, it can be said that the region of interest RE does not include at least the first row. In FIG. 10, in the second imaging unit 22, a region corresponding to the region of interest RE is illustrated as a corresponding region R0. The corresponding region R0 includes rows corresponding to the rows included in the region of interest RE. The corresponding region R0 is set from the K-th row to the Q-th row in the second imaging unit 22. In the imaging unit 2, a region excluding the region of interest RE and the corresponding region R0 is defined as a region of non-interest RN.

In the example of FIG. 10, the region of interest RE is the read-out region of the first imaging unit 21 (first read-out region). If the K-th row to the Q-th row constitute a group of row numbers, the group of row numbers of the read-out region of the first imaging unit 21 includes the group of row numbers of the region of interest RE in the first imaging unit 21. The corresponding region R0 is the read-out region of the second imaging unit 22 (second read-out region). The groups of row numbers of the read-out regions of the first imaging unit 21 and the second imaging unit 22 are set based on the group of row numbers of the region of interest RE. The group of row numbers of the read-out region (region of interest RE) of the first imaging unit 21 matches the group of row numbers of the read-out region (corresponding region R0) of the second imaging unit. The number of rows of the read-out region of the first imaging unit 21 matches the number of rows of the read-out region of the second imaging unit 22.

The control unit 4 receives the input Sr from the input unit 40 and recognizes the set region of interest RE. The control unit 4 controls the first row selection unit 31 based on the common instruction signal Sa to select the rows included in the region of interest RE in the first imaging unit 21. In parallel with this, the control unit 4 controls the second row selection unit 32 based on the common instruction signal Sa to select the rows included in the corresponding region R0 in the second imaging unit 22. Specifically, the control unit 4 controls the first row selection unit 31 to select the rows of the first imaging unit 21 in ascending order along the first direction A1 from the K-th row of the first imaging unit 21 to the Q-th row of the first imaging unit 21. In parallel with this, the control unit 4 controls the second row selection unit 32 to select the rows of the second imaging unit 22 from the K-th row of the second imaging unit 22 to the Q-th row of the second imaging unit 22 in ascending order along the second direction A2. The plurality of first read-out circuits 51 sequentially read out electrical signals from an electrical signal S1_{K} of the K-th row of the first imaging unit 21 to an electrical signal S1_{Q} of the Q-th row of the first imaging unit 21. The plurality of second read-out circuits 52 sequentially read out electrical signals from an electrical signal S2_{K} of the K-th row of the second imaging unit 22 to an electrical signal S2_{Q} of the Q-th row of the second imaging unit 22.

The control unit 4 controls the first row selection unit 31 and the second row selection unit 32 based on the common instruction signal Sa so as not to select rows not included in the region of interest RE and the corresponding region R0. In the example of FIG. 10, the rows not included in the region of interest RE and the corresponding region R0 are the rows from the first row to the M₁-th row or to the M₂-th row, excluding the rows from the K-th row to the Q-th row. As a result, the plurality of first read-out circuits 51 and the plurality of second read-out circuits 52 do not read out the electrical signals of the rows not included in the region of interest RE and the corresponding region R0. In other words, the plurality of first read-out circuits 51 and the plurality of second read-out circuits 52 skip reading the electrical signals of the rows not included in the region of interest RE and the corresponding region R0. Alternatively, the control unit 4 may skip the electrical signals from the rows not included in the region of interest RE and the corresponding region R0. Skipping refers to, for example, the following operation. The first row selection unit 31 outputs a row selection signal VSAₘ₁ with a short period of significant value to the rows not included in the region of interest RE and the corresponding region R0 via the buffer BAₘ₁. The electrical signals read out from the rows not included in the region of interest RE and the corresponding region R0 are held in the capacitance element 512c and are reset before being output to the voltage output wiring 515. In the case of skipping, since electrical signals are read out from the rows not included in the region of interest RE and the corresponding region R0, the risk of saturation of the pixels included in the rows not included in the region of interest RE and the corresponding region R0 is suppressed compared to omitting the read-out.

Reference is again made to FIG. 1. The plurality of FIFO memories 6 include a plurality of first FIFO memories 61 and a plurality of second FIFO memories 62. The number of the plurality of first FIFO memories 61 is the same as the number of the plurality of first read-out circuits 51. The number of the plurality of second FIFO memories 62 is the same as the number of the plurality of second read-out circuits 52. The plurality of first FIFO memories 61 sequentially store the electrical signals read out from the plurality of first read-out circuits 51. Specifically, as shown in FIG. 10, the electrical signals from the electrical signal S1_{K} of the K-th row of the first imaging unit 21 to the electrical signal S1_{Q} of the Q-th row of the first imaging unit 21 are sequentially stored. At this time, each of the plurality of first FIFO memories 61 stores the signal of each row in the first imaging unit 21 for every N columns. The plurality of second FIFO memories 62 sequentially store the electrical signals read out from the plurality of second read-out circuits 52. Specifically, as shown in FIG. 10, they sequentially store the electrical signals from the electrical signal S2_{K} of the K-th row of the second imaging unit 22 to the electrical signal S2_{Q} of the Q-th row of the second imaging unit 22. At this time, each of the plurality of second FIFO memories 62 stores the signal of each row in the second imaging unit 22 for every N columns.

The multiplexer 7 has a plurality of input terminals 71 and one output terminal 72. The number of the plurality of input terminals 71 is the same as the number of the plurality of FIFO memories 6. The multiplexer 7 inputs the electrical signals corresponding to the columns of the region of interest RE among the electrical signals stored in the plurality of first FIFO memories 61 to the plurality of input terminals 71. The multiplexer 7 inputs the electrical signals corresponding to the columns of the corresponding region R0 among the electrical signals stored in the plurality of second FIFO memories 62 to the plurality of input terminals 71.

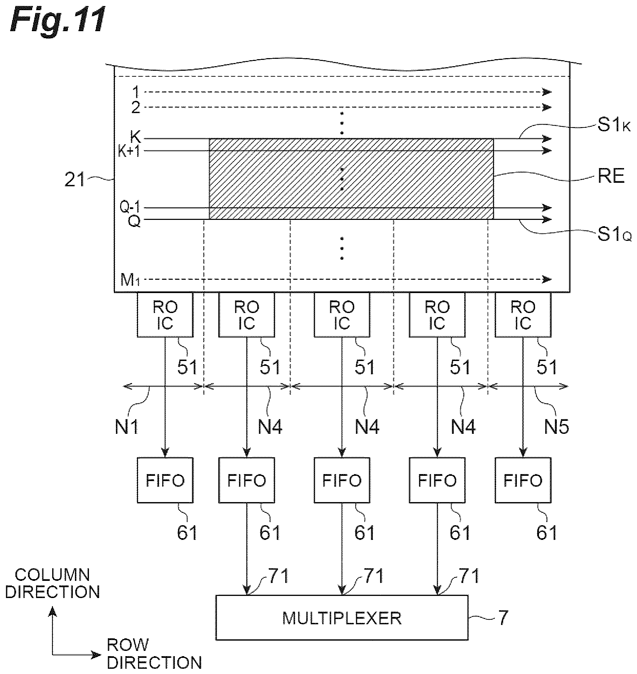

Here, the operations of the plurality of read-out circuits 5, the plurality of FIFO memories 6, and the multiplexer 7 will be described with a specific example. FIG. 11 shows an example of the plurality of first read-out circuits 51, the plurality of first FIFO memories 61, and the multiplexer 7. For convenience of explanation, in FIG. 11, it is assumed that five first read-out circuits 51 and five first FIFO memories 61 are arranged along the row direction. In the example of FIG. 11, the electrical signal of each row is divided into five groups, from a first N-column group N1 to a fifth N-column group N5. Then, it is assumed that each of the five first read-out circuits 51 reads out the electrical signal of each of the first N-column group N1 to the fifth N-column group N5. Here, the electrical signals of the first N-column group N1 and the fifth N-column group N5 correspond to the electrical signals of the region of non-interest RN, and the electrical signals of the second N-column group N2 to the fourth N-column group N4 correspond to the electrical signals of the region of interest RE.

The electrical signals of the first N-column group N1 to the fifth N-column group N5 read out by the five first read-out circuits 51 are stored in the five first FIFO memories 61, respectively. The multiplexer 7 inputs the electrical signals of the second N-column group N2 to the fourth N-column group N4 among the electrical signals stored in the five first FIFO memories 61 to the plurality of input terminals 71. As a result, the multiplexer 7 inputs only the electrical signals of the region of interest RE to the plurality of input terminals 71. The read-out and storage operations for the electrical signals of the corresponding region R0, and output operation thereof to the multiplexer 7, by the plurality of second read-out circuits 52 and the plurality of second FIFO memories 62 are the same as the above-described operations.

The multiplexer 7 outputs the electrical signals one row at a time from one output terminal 72 to the subsequent accumulation unit 8. At this time, the multiplexer 7 alternately outputs the electrical signals corresponding to each row of the region of interest RE and the electrical signals corresponding to each row of the corresponding region R0. First, the multiplexer 7 outputs the electrical signals corresponding to the columns of the region of interest RE among the electrical signals S1_{K} of the K-th row of the first imaging unit 21. Subsequently, the multiplexer 7 outputs the electrical signals corresponding to the columns of the corresponding region R0 among the electrical signals S2_{K} of the K-th row of the second imaging unit 22. Subsequently, the multiplexer 7 outputs the electrical signals corresponding to the columns of the region of interest RE among the electrical signals S1_{K+1} of the (K+1)-th row of the first imaging unit 21. Subsequently, the multiplexer 7 outputs the electrical signals corresponding to the columns of the corresponding region R0 among the electrical signals S2_{K+1} of the (K+1)-th row of the second imaging unit 22. The above output operation is repeated until the electrical signal S2_{Q} of the Q-th row of the second imaging unit 22 is output.

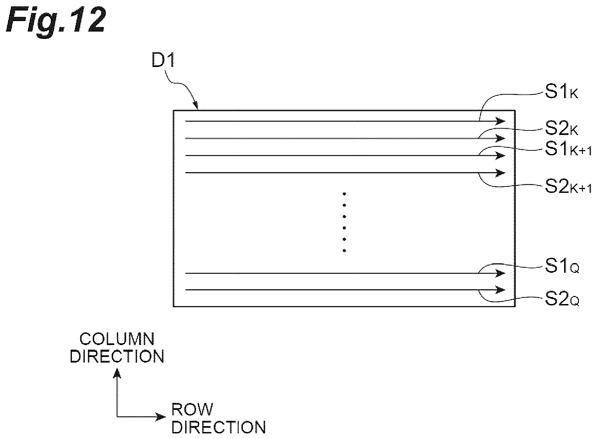

FIG. 12 is a diagram illustrating an example of first data D1 generated by the accumulation unit 8. The accumulation unit 8 generates the first data D1 by alternately accumulating the electrical signals corresponding to the columns of the region of interest RE among the electrical signals of each row of the first imaging unit 21 and the electrical signals corresponding to the columns of the corresponding region R0 among the electrical signals of each row of the second imaging unit 22, according to the input order of the electrical signals input from the multiplexer 7. The first data D1 is data in which electrical signals ranging from the electrical signals S1_{K} of the K-th row of the first imaging unit 21 corresponding to the columns of the region of interest RE to the electrical signals S2_{Q} of the Q-th row of the second imaging unit 22 corresponding to the columns of the corresponding region R0 are arranged along the column direction. In other words, the first data D1 is data in which the electrical signals read out from each row of the read-out region (region of interest RE) of the first imaging unit 21 selected by the first row selection unit 31 and the electrical signals read out from each row of the read-out region (corresponding region R0) of the second imaging unit 22 selected by the second row selection unit 32 are alternately accumulated. The accumulation unit 8 outputs the first data D1 to the rearrangement unit 9.

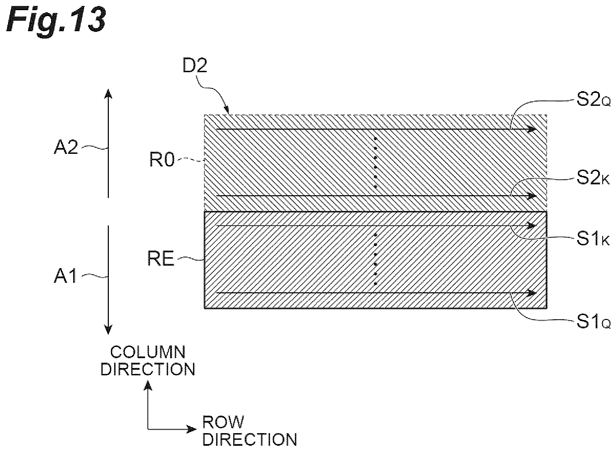

FIG. 13 is a diagram illustrating an example of second data D2 generated by the rearrangement unit 9. The rearrangement unit 9 rearranges the electrical signals read out from the read-out region (region of interest RE) of the first imaging unit 21, which are in the first data D1, to positions corresponding to the read-out region (region of interest RE) of the first imaging unit 21. Specifically, the rearrangement unit 9 rearranges the first data D1 so that the electrical signals corresponding to the columns of the region of interest RE among the electrical signals of each row of the first imaging unit 21 are sequentially arranged to correspond to each row of the first imaging unit 21. In parallel with this, the rearrangement unit 9 rearranges the electrical signals read out from the read-out region (corresponding region R0) of the second imaging unit 22, which are included in the first data D1, to positions corresponding to the read-out region (corresponding region R0) of the second imaging unit 22. Specifically, the rearrangement unit 9 rearranges the first data D1 so that the electrical signals corresponding to the columns of the corresponding region R0 among the electrical signals of each row of the second imaging unit 22 are sequentially arranged to correspond to each row of the second imaging unit 22. The rearrangement unit 9 generates the second data D2 by these rearrangement operations. In the second data D2, electrical signals ranging from the electrical signals S1_{K} of the K-th row of the first imaging unit 21 corresponding to the columns of the region of interest RE to the electrical signals S1_{Q} of the Q-th row of the first imaging unit 21 corresponding to the columns of the region of interest RE are arranged along the first direction A1. Similarly, in the second data D2, from the electrical signals S2_{K} of the K-th row of the second imaging unit 22 corresponding to the columns of the corresponding region R0 to the electrical signals S2_{Q} of the Q-th row of the second imaging unit 22 corresponding to the columns of the corresponding region R0 are arranged along the second direction A2. The rearrangement unit 9 outputs the second data D2 to the extraction unit 10.

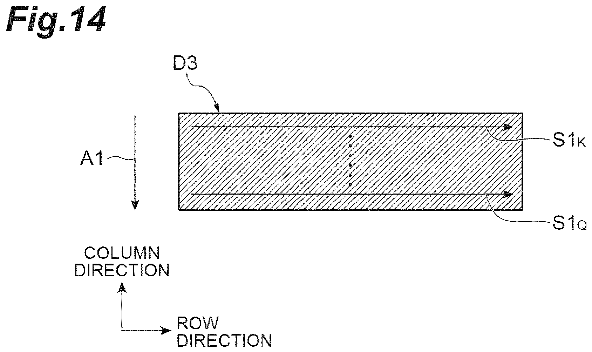

FIG. 14 is a diagram illustrating an example of third data D3 generated by the extraction unit 10. The extraction unit 10 extracts only the third data D3 corresponding to the electrical signals included in the region of interest RE from the second data D2, and excludes the electrical signals of the corresponding region R0. In other words, the extraction unit 10 extracts a part of the second data to generate the third data. In the third data D3, electrical signals from the electrical signals S1ₖ of the K-th row of the first imaging unit 21 corresponding to the columns of the region of interest RE to the electrical signals S1_{Q} of the Q-th row of the first imaging unit 21 corresponding to the columns of the region of interest RE are arranged along the first direction A1. The extraction unit 10 outputs the third data D3 to the analysis unit 50.

The analysis unit 50 acquires, for example, an X-ray image of the subject based on the third data D3. The analysis unit 50 is, for example, a personal computer (PC).

### [Operation and Effects]

In the imaging apparatus 1, the region of interest RE is set in the first imaging unit 21, and at least the group of row numbers (K-th row to Q-th row) of the read-out region of the first imaging unit 21 is set based on the group of row numbers of the region of interest RE. The group of row numbers of the read-out region of the first imaging unit 21 includes the group of row numbers of the region of interest RE in the first imaging unit 21. This allows for selectively reading out the electrical signals corresponding to the group of row numbers of the read-out region, which includes the group of row numbers of the region of interest RE, from the entire first imaging unit 21. Then, the row selection unit 3 selects each row included in the read-out region of the first imaging unit 21 and each row included in the read-out region of the second imaging unit 22 in ascending order in both of the first imaging unit 21 and the second imaging unit 22, or in descending order in both. This allows for reading out electrical signals in parallel from the rows of the first imaging unit 21 and the rows of the second imaging unit 22. Therefore, even if the region of interest RE is set only in the first imaging unit 21, there is no need for complicated control such as reading out electrical signals only from the rows of the first imaging unit 21 and not reading out electrical signals from the rows of the second imaging unit 22. In other words, the electrical signals of an arbitrary region of interest RE can be read out without complicated control. Furthermore, since the accumulation unit 8 generates the first data D1, processing can be easier compared to, for example, a case where the electrical signals read out from the rows of the first imaging unit 21 and the electrical signals read out from the rows of the second imaging unit 22 are processed individually. In addition, the rearrangement unit 9 rearranges the first data D1 to generate the second data D2, and the extraction unit 10 extracts the third data D3 corresponding to the region of interest RE. This allows the region of interest RE to be set arbitrarily. Furthermore, since the row selection direction can be ascending or descending in both units, the row selection direction in the first imaging unit 21 can be made opposite to the row selection direction in the second imaging unit 22. This can make it difficult for a deviation to occur in the read-out timing of electrical signals near the boundary line BD between the first imaging unit 21 and the second imaging unit 22, if the imaging apparatus 1 reads out electrical signals using a rolling shutter method.

The group of row numbers of the read-out region of the first imaging unit 21 matches the group of row numbers of the read-out region of the second imaging unit 22. In this case, when reading out electrical signals in parallel from the rows of the first imaging unit 21 and the rows of the second imaging unit 22, the rows to be read out can be matched. This allows the electrical signals of an arbitrary region of interest RE to be read out with simpler control.

The extraction unit 10 extracts a part of the second data D2 to generate the third data D3. In this case, even when the region of interest RE is set in either one of the first imaging unit 21 and the second imaging unit 22, the third data D3 corresponding to the region of interest RE can be generated.

The row selection unit 3 selects each row included in the read-out region of the first imaging unit 21 and each row included in the read-out region of the second imaging unit 22 in ascending order in both of the first imaging unit 21 and the second imaging unit 22. In this case, the region of interest RE is often set in a region close to the boundary line BD between the first imaging unit 21 and the second imaging unit 22. In the imaging apparatus 1, by selecting each row included in the read-out region in ascending order, the electrical signals of the region of interest RE can be read out at an early timing. This can suppress the saturation of the pixels P_{1,1} to P_{M1,N} included in the region of interest RE due to a longer exposure time for the region of interest RE. Reading out the electrical signals of the rows near the boundary line BD first, compared to reading them out last, can make it more difficult for a deviation to occur in the read-out timing near the boundary line BD. Furthermore, for example, when the imaging target is a moving image, a deviation in the read-out timing near the boundary line BD can be made even more difficult to occur.

The row selection unit 3 simultaneously selects rows of the same number in both of the first imaging unit 21 and the second imaging unit 22 based on the common instruction signal Sa. In this case, since the row selection unit 3 does not need to individually select each row of the first imaging unit 21 and each row of the second imaging unit 22, the load on the row selection unit 3 can be reduced.

The number of rows M₁ of the first imaging unit 21 and the number of rows M₂ of the second imaging unit 22 are equal to each other. In this case, the configurations of the first row selection unit 31 and the second row selection unit 32 can be made the same. Therefore, the design of the first row selection unit 31 and the second row selection unit 32 can be facilitated.

The plurality of pixels of the first imaging unit 21 and the plurality of pixels of the second imaging unit 22 are arranged from a first column to an L-th column (L is an integer greater than or equal to 2), and the imaging apparatus 1 further comprises a first read-out circuit 51 configured to read out the electrical signals read out from each row of the read-out region of the first imaging unit 21 sequentially from the first column, and a second read-out circuit 52 configured to read out the electrical signals read out from each row of the read-out region of the second imaging unit 22 sequentially from the first column, wherein the first column of the second imaging unit 22 is located on a side opposite to the first column of the first imaging unit 21 in the row direction. In this case, since the first column of the second imaging unit 22 is located on the side opposite to the first column of the first imaging unit 21 in the row direction, the connection configuration between the first read-out circuit 51 and the first imaging unit 21 and the connection configuration between the second read-out circuit 52 and the second imaging unit 22 can be made the same. Therefore, the design of the connection configuration between the first read-out circuit 51 and the first imaging unit 21 and the connection configuration between the second read-out circuit 52 and the second imaging unit 22 can be facilitated.

### [Modifications]

Although the embodiments of the present disclosure have been described above, the present disclosure is not necessarily limited to the above-described embodiments, and various modifications can be made without departing from the gist thereof.

The first row selection unit 31 may select each row of the first imaging unit 21 in descending order. The second row selection unit 32 may select each row of the second imaging unit 22 in descending order. Specifically, the specifics are as follows. The first row selection unit 31 may sequentially select the rows of the first imaging unit 21 along a direction from a row farthest from the boundary line BD (the M₁-th row) to a row closest to the boundary line BD (the first row). In parallel with this, the second row selection unit 32 may sequentially select the rows of the second imaging unit 22 along a direction from a row farthest from the boundary line BD (the M₂-th row) to a row closest to the boundary line BD (the first row). By selecting in descending order in both the first imaging unit 21 and the second imaging unit 22, the row selection direction in the first imaging unit 21 can be made opposite to the row selection direction in the second imaging unit 22. This can make it difficult for a deviation to occur in the read-out timing of electrical signals near the boundary between the first imaging unit 21 and the second imaging unit 22.

The number of rows M₁ of the first imaging unit 21 and the number of rows M₂ of the second imaging unit 22 may be different. Even if the number of rows is different, electrical signals can be selectively read out from the group of row numbers of the read-out region including the group of row numbers of the region of interest RE, and the processing speed improves compared to the case where electrical signals are read out from all rows.

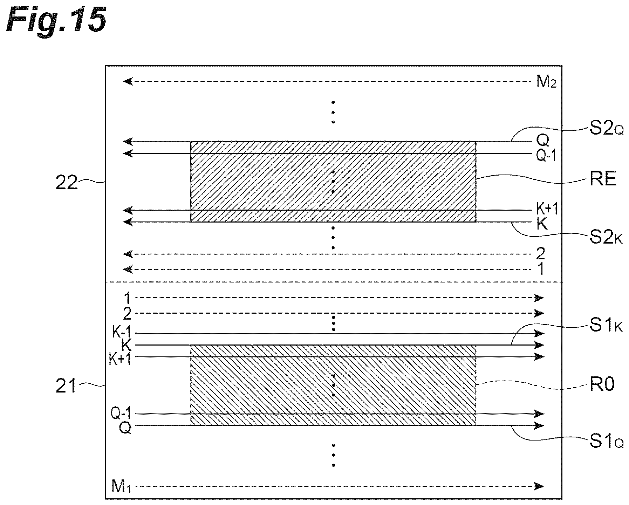

FIG. 15 is a diagram for explaining a read-out region according to a first modification. In the read-out region according to the first modification, the region of interest RE is set only in the second imaging unit 22 and is not set in the first imaging unit 21. The region of interest RE is set from a K-th row to a Q-th row in the second imaging unit 22. Here, K is an integer greater than or equal to 2 and less than or equal to Q, and Q is an integer greater than or equal to K and less than or equal to M₁. In other words, the region of interest RE is set at a position spaced by K-1 rows from the boundary line BD, extending over the number of rows corresponding to the difference between Q rows and K rows along the column direction. That is, it can be said that the region of interest RE does not include at least the first row. In FIG. 15, a region corresponding to the region of interest RE in the first imaging unit 21 is illustrated as a corresponding region R0. The corresponding region R0 includes rows corresponding to the rows included in the region of interest RE. The corresponding region R0 is set from the K-th row to the Q-th row in the first imaging unit 21.

In the first modification, the region of interest RE is the read-out region of the second imaging unit 22. If the K-th row to the Q-th row constitute a group of row numbers, the group of row numbers of the read-out region of the second imaging unit 22 includes the group of row numbers of the region of interest RE in the second imaging unit 22. The corresponding region R0 is the read-out region of the first imaging unit 21. The groups of row numbers of the read-out regions of the first imaging unit 21 and the second imaging unit 22 are set based on the group of row numbers of the region of interest RE. The group of row numbers of the read-out region (region of interest RE) of the second imaging unit 22 matches the group of row numbers of the read-out region (corresponding region R0) of the first imaging unit. In the first modification, the group of row numbers of the read-out region is set based on the group of row numbers of the region of interest RE, and the group of row numbers of the read-out region of the second imaging unit 22 includes the group of row numbers of the region of interest RE in the second imaging unit 22. This allows for selectively reading out electrical signals from the group of row numbers of the read-out region including the group of row numbers of the region of interest RE, and the processing speed improves compared to the case where electrical signals are read out from all rows.

In the first modification, the region of interest RE is set in the second imaging unit 22, and at least the group of row numbers of the read-out region of the second imaging unit 22 is set based on the group of row numbers of the region of interest RE. The group of row numbers of the read-out region of the second imaging unit 22 includes the group of row numbers of the region of interest RE in the second imaging unit 22. In this case, even if the region of interest RE is set only in the second imaging unit 22, there is no need for complicated control such as reading out electrical signals only from the rows of the second imaging unit 22 and not reading out electrical signals from the rows of the first imaging unit 21. In other words, the electrical signals of an arbitrary region of interest RE can be read out without complicated control.

In the present embodiment and the first modification, the input unit 40 is set in one of the first imaging unit 21 and the second imaging unit 22, and the input unit 40 receives at least the region of interest RE that does not include the first row in the one imaging unit. Even when the region of interest RE is set in one of the first imaging unit 21 and the second imaging unit 22, the electrical signals of the arbitrary region of interest RE can be read out without complicated control.

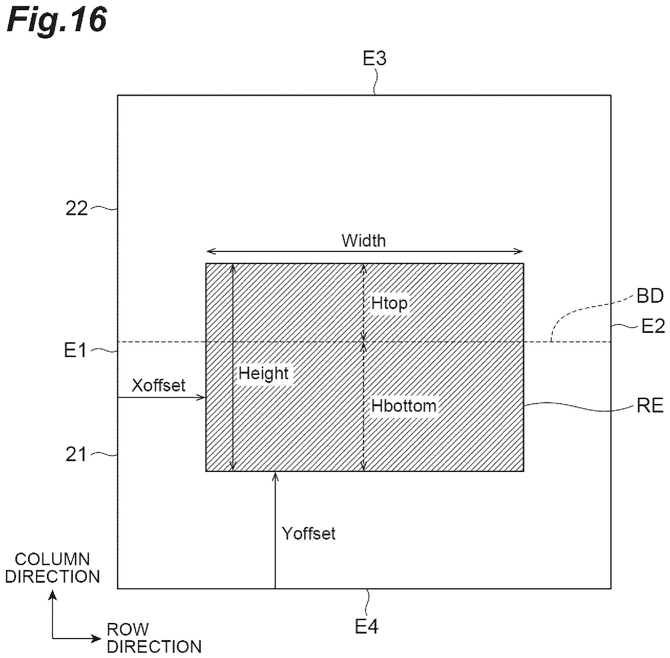

Next, read-out regions according to a second modification and a third modification will be described. In the second and third modifications, the region of interest RE is set in each of the first imaging unit 21 and the second imaging unit 22. FIG. 16 is a diagram for explaining another example of setting the region of interest. The region of interest RE is set so as to straddle the boundary line BD. That is, the region of interest RE includes the first row in both of the first imaging unit 21 and the second imaging unit 22. The user sets a width Width of the region of interest, a height Height of the region of interest, an offset Xoffset in the row direction from the first side E1 to the region of interest RE, and an offset Yoffset in the column direction from the second side E4 to the region of interest RE. In the example of FIG. 16, the height Height is a value obtained by summing a height Hbottom of the region of interest RE set in the first imaging unit 21 and a height Htop of the region of interest RE set in the second imaging unit 22.

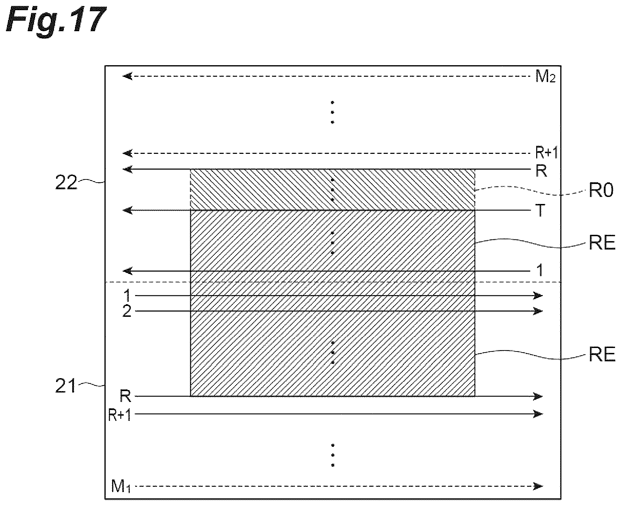

FIG. 17 is a diagram for explaining a read-out region according to the second modification. The row range of the region of interest RE set in the first imaging unit 21 is different from the row range of the region of interest RE set in the second imaging unit 22. In the second modification, the region of interest RE set in the first imaging unit 21 is set from a first row to an R-th row in the first imaging unit 21. Here, R is an integer greater than or equal to 1 and less than or equal to M₁. On the other hand, the region of interest RE set in the second imaging unit 22 is set from a first row to a T-th row in the second imaging unit 22. Here, T is an integer greater than or equal to 1 and less than R. In the second imaging unit 22, a region that is a difference between the region of interest RE set in the first imaging unit 21 and the region of interest RE set in the second imaging unit 22 is set as a corresponding region R0. In the example of FIG. 16, the corresponding region R0 is set in the second imaging unit 22 so as to extend over the number of rows corresponding to the difference between the T-th row and the R-th row along the column direction. The region of interest RE in the first imaging unit 21 is the read-out region of the first imaging unit 21. The region of interest RE in the second imaging unit 22 and the corresponding region R0 in the second imaging unit 22 are the read-out regions of the second imaging unit 22.

In the second modification, the input unit 40 is set in both of the first imaging unit 21 and the second imaging unit 22 and includes the first row in both of the first imaging unit 21 and the second imaging unit 22. In the second modification, at least the region of interest RE in which row ranges are different from each other between the first imaging unit 21 and the second imaging unit 22 is received. Even when the region of interest RE is set in both the first imaging unit 21 and the second imaging unit 22, and the row range of the region of interest RE in the first imaging unit 21 is different from the row range of the region of interest RE in the second imaging unit 22, the electrical signals of the arbitrary region of interest RE can be read out without complicated control.

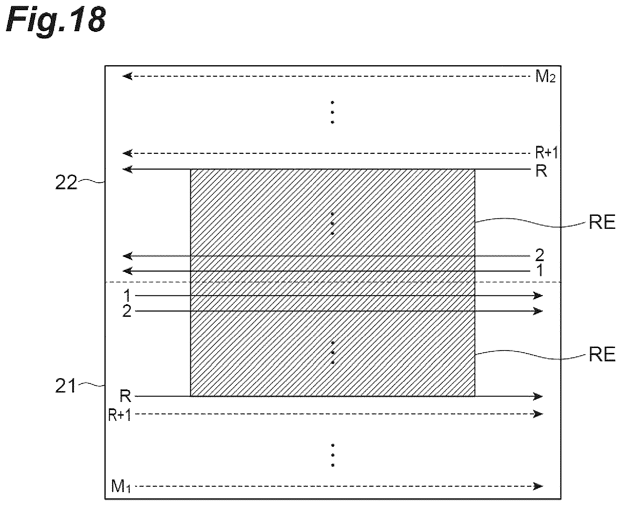

FIG. 18 is a diagram for explaining a read-out region according to a third modification. In the read-out region according to the third modification, the row range of the region of interest RE set in the first imaging unit 21 is equal to the row range of the region of interest RE set in the second imaging unit 22. In the third modification, the region of interest RE set in the first imaging unit 21 is set from a first row to an R-th row in the first imaging unit 21. Here, R is an integer greater than or equal to 1 and less than or equal to M₁. Similarly, the region of interest RE set in the second imaging unit 22 is set from a first row to an R-th row in the second imaging unit 22. In the third modification, since the row range of the region of interest RE set in the first imaging unit 21 is equal to the row range of the region of interest RE set in the second imaging unit 22, a corresponding region R0 is not set. The region of interest RE in the first imaging unit 21 is the read-out region of the first imaging unit 21. The region of interest RE in the second imaging unit 22 is the read-out region of the second imaging unit 22. In the third modification, since the corresponding region R0 is not set, the extraction unit 10 extracts all of the second data D2 to generate the third data. This allows the third data D3 corresponding to the region of interest RE to be generated even when the region of interest RE is set in both of the first imaging unit 21 and the second imaging unit 22.

The control unit 4 may selectively switch, in response to an external input, between a mode of reading out electrical signals from each row included in the read-out region of the first imaging unit 21 and each row included in the read-out region of the second imaging unit 22, and a mode of reading out electrical signals from all rows of the first imaging unit 21 and the second imaging unit 22. The operation when the mode of reading out electrical signals from all rows is selected is as follows. The first row selection unit 31 may select all rows of the first imaging unit 21 based on the common instruction signal Sa transmitted from the control unit 4. In parallel with this, the second row selection unit 32 may select all rows of the second imaging unit 22 based on the common instruction signal Sa transmitted from the control unit 4. Then, the plurality of first read-out circuits 51 may sequentially read out the electrical signals of all rows of the first imaging unit 21. The plurality of second read-out circuits 52 may sequentially read out the electrical signals of all rows of the second imaging unit 22. Thereafter, the accumulation unit 8 may generate the first data D1 by alternately accumulating the electrical signals of all rows of the first imaging unit 21 and the electrical signals of all rows of the second imaging unit 22, according to the input order of the electrical signals input from the multiplexer 7. Then, the rearrangement unit 9 may rearrange the electrical signals read out from all rows of the first imaging unit 21, which are in the first data D1, to positions corresponding to each row of the first imaging unit 21. In parallel with this, the rearrangement unit 9 may rearrange the electrical signals read out from all rows of the second imaging unit 22, which are in the first data D1, to positions corresponding to each row of the second imaging unit 22. In this case, the mode of reading out electrical signals from all rows of the first imaging unit 21 and the second imaging unit 22, and the mode of reading out electrical signals from each row included in the read-out region of the first imaging unit 21 and each row included in the read-out region of the second imaging unit 22 can be performed with the same interface, and the flexibility in read-out can be improved.

As long as the number of rows of the read-out region of the first imaging unit 21 matches the number of rows of the read-out region of the second imaging unit 22, the group of row numbers of the read-out region (region of interest RE) of the first imaging unit 21 does not necessarily have to match the group of row numbers of the read-out region (corresponding region R0) of the second imaging unit. In other words, the read-out region of the first imaging unit 21 does not have to be line-symmetric with the read-out region of the second imaging unit 22 with respect to the boundary line BD. For example, the group of row numbers of the read-out region (region of interest RE) of the first imaging unit 21 may be from the K-th row to the Q-th row, and the group of row numbers of the read-out region (corresponding region R0) of the second imaging unit may be from the (K+1)-th row to the (Q+1)-th row. In this case, when reading out electrical signals in parallel from the rows of the first imaging unit 21 and the rows of the second imaging unit 22, the degree of freedom in read-out can be improved while realizing simple control by matching the number of rows to be read out.

The number of rows of the read-out region of the first imaging unit 21 does not have to match the number of rows of the read-out region of the second imaging unit 22. The number of rows of the read-out region of the first imaging unit 21 may be one row more or one row less than the number of rows of the read-out region of the second imaging unit 22. In other words, the read-out region of the first imaging unit 21 does not have to be line-symmetric with the read-out region of the second imaging unit 22 with respect to the boundary line BD. Even in this case, the accumulation unit 8 generates the first data D1 by alternately accumulating the electrical signals corresponding to the columns of the region of interest RE among the electrical signals of each row of the first imaging unit 21 and the electrical signals corresponding to the columns of the corresponding region R0 among the electrical signals of each row of the second imaging unit 22. For example, if the group of row numbers of the read-out region (region of interest RE) of the first imaging unit 21 is from the K-th row to the (Q+1)-th row, and the group of row numbers of the read-out region (corresponding region R0) of the second imaging unit is from the K-th row to the Q-th row, the first data D1 is data in which the electrical signals from the electrical signals S1_{K} of the K-th row of the first imaging unit 21 corresponding to the columns of the region of interest RE to the electrical signals S1_{Q+1} of the (Q+1)-th row of the first imaging unit 21 corresponding to the columns of the region of interest RE are arranged along the column direction. In this case, when reading out electrical signals in parallel from the rows of the first imaging unit 21 and the rows of the second imaging unit 22, the degree of freedom in read-out can be further improved.

### Reference Signs List

1: imaging apparatus, 2: imaging unit, 21: first imaging unit, 22: second imaging unit, 3: row selection unit, 51: first read-out circuit, 52: second read-out circuit, 8: accumulation unit, 9: rearrangement unit, 10: extraction unit, 40: input unit, D1: first data, D2: second data, D3: third data, RE: region of interest (first read-out region), R0: corresponding region (second read-out region), Sa: common instruction signal, Sr: input.

## Claims

1. An imaging apparatus comprising:
a first imaging unit including a plurality of pixels arranged from a first row to an M₁-th row (M₁ is an integer greater than or equal to 2);
a second imaging unit including a plurality of pixels arranged from a first row to an M₂-th row (M₂ is an integer greater than or equal to 2), and arranged such that the first row of the second imaging unit faces the first row of the first imaging unit;
an input unit that receives an input for setting a region of interest extending over at least one of the first imaging unit and the second imaging unit;
a row selection unit that selects each row included in a first read-out region, which is a part of the first imaging unit, and each row included in a second read-out region, which is a part of the second imaging unit, in ascending order in both of the first imaging unit and the second imaging unit, or in descending order in both of the first imaging unit and the second imaging unit;
an accumulation unit that generates first data in which electrical signals read out from each row of the first read-out region selected by the row selection unit and electrical signals read out from each row of the second read-out region selected by the row selection unit are alternately accumulated;
a rearrangement unit that generates second data by rearranging the electrical signals read out from the first read-out region, which are in the first data, to positions corresponding to the first read-out region, and rearranging the electrical signals read out from the second read-out region, which are in the first data, to positions corresponding to the second read-out region; and
an extraction unit that extracts third data corresponding to the region of interest from the second data,
wherein, at least a part of the region of interest is set in the first imaging unit, at least a group of row numbers of the first read-out region is set based on a group of row numbers of the region of interest, and
the group of row numbers of the first read-out region includes the group of row numbers of the region of interest in the first imaging unit.

2. The imaging apparatus according to claim 1,
wherein the group of row numbers of the first read-out region matches a group of row numbers of the second read-out region.

3. The imaging apparatus according to claim 1 or 2,
wherein, the region of interest is set in the second imaging unit, at least a group of row numbers of the second read-out region is set based on the group of row numbers of the region of interest, and
the group of row numbers of the second read-out region includes the group of row numbers of the region of interest in the second imaging unit.

4. The imaging apparatus according to any one of claims 1 to 3,
wherein the extraction unit extracts a part of the second data to generate the third data.

5. The imaging apparatus according to any one of claims 1 to 3,
wherein the extraction unit extracts all of the second data to generate the third data.

6. The imaging apparatus according to any one of claims 1 to 5,
wherein the row selection unit selects each row included in the first read-out region and each row included in the second read-out region in ascending order in both of the first imaging unit and the second imaging unit.

7. The imaging apparatus according to any one of claims 1 to 6,
wherein the row selection unit simultaneously selects rows of the same number in both of the first imaging unit and the second imaging unit based on a common instruction signal.

8. The imaging apparatus according to any one of claims 1 to 7,
wherein the plurality of pixels of the first imaging unit and the plurality of pixels of the second imaging unit are arranged from a first column to an L-th column (L is an integer greater than or equal to 2),
the imaging apparatus further comprising:
a first read-out circuit that reads out the electrical signals read out from each row of the first read-out region sequentially from the first column; and
a second read-out circuit that reads out the electrical signals read out from each row of the second read-out region sequentially from the first column,
wherein the first column of the second imaging unit is located on a side opposite to the first column of the first imaging unit in a row direction.

9. The imaging apparatus according to any one of claims 1 to 8,
wherein the input unit receives at least the region of interest that is set in both of the first imaging unit and the second imaging unit, includes the first row in both of the first imaging unit and the second imaging unit, and has row ranges different from each other in the first imaging unit and the second imaging unit.

10. The imaging apparatus according to any one of claims 1 to 8,
wherein the input unit receives at least the region of interest that is set in one imaging unit of the first imaging unit and the second imaging unit, and does not include the first row in the one imaging unit .

11. The imaging apparatus according to any one of claims 1 to 10,
wherein the number of rows of the first read-out region matches the number of rows of the second read-out region.

12. The imaging apparatus according to any one of claims 1 to 11,
further comprising a control unit that selectively switches between a mode of reading out electrical signals from each row included in the first read-out region and each row included in the second read-out region, and a mode of reading out electrical signals from all rows of the first imaging unit and the second imaging unit.
